# EUROPÄISCHE PATENTSCHRIFT

(11) **EP 2 152 443 B1**
(45) Veröffentlichungstag und Bekanntmachung des Hinweises auf die Patenterteilung: **19.10.2011**
(21) Anmeldenummer: 08758411.6
(22) Anmeldetag: 08.05.2008
(51) Int. Cl.: B21B 31/07, F16C 33/66, F16N 7/38, F16N 27/00, F16N 7/32

(54) **VORRICHTUNG ZUR SCHMIERSTOFFVERSORGUNG UND LAGERANORDNUNG HIERMIT**
DEVICE FOR SUPPLYING LUBRICANT AND BEARING ASSEMBLY THEREWITH
SYSTÈME D'ALIMENTATION EN LUBRIFIANT ET ENSEMBLE PALIER POURVU DE CE SYSTÈME

(30) Priorität: 14.06.2007 DE 202007008531 U
(43) Veröffentlichungstag der Anmeldung: 17.02.2010
(73) Patentinhaber: Lincoln GmbH, 69190 Walldorf (DE)
(72) Erfinder: PALUNCIC, Zdravko, 67067 Ludwigshafen (DE)
(74) Vertreter: KEIL & SCHAAFHAUSEN Patentanwälte
(86) Internationale Anmeldenummer: PCT/EP2008/003685
(87) Internationale Veröffentlichungsnummer: WO 2008/151698

(56) Entgegenhaltungen:
- WO-A-2007/134815
- DE-A1- 1 940 586
- DE-C1- 4 395 740
- DE-U1-202006 011 249
- US-A- 3 809 184
- SCHRAMA R C ET AL: "ROLL NECK BEARING LUBRICATION SYSTEMS" AISE STEEL TECHNOLOGY, AISE, PITTSBURG, PA, US, Bd. 66, Nr. 3, 1. März 1989 (1989-03-01), Seiten 41-46, XP000023472 ISSN: 0021-1559

## Beschreibung

Die Erfindung betrifft eine Vorrichtung zur Schmierstoffversorgung, insbesondere zur Zudosierung von Schmierstoff zu Schmierstellen in einem Walzwerk oder dergleichen. Weiter betrifft die Erfindung eine Lageranordnung, die beispielsweise in einem Walzwerk eingesetzt ist, mit wenigstens einer derartigen Vorrichtung zur Schmierstoffversorgung. Eine solche Vorrichtung ist beispielsweise aus der DE 20 2006 011249 U bekannt.

In Walzwerken wird zur Schmierung von Lagern neben Fett immer häufiger Öl verwendet. Dabei wird eine kleine Ölmenge teilweise zusammen mit Luft zu den Lagern transportiert. Die Luft hat dabei zusätzlich zu dem Transport des Öls auch die Funktion, das Lager durch Überdruck nach außen abzudichten. Für derartige Anwendungsfälle ist es bekannt, in Lagern Leitungen vorzusehen, über welche Öl gemeinsam mit Luft zu den Schmierstellen des Lagers zugeführt werden. Hierbei ist jeder Schmierstelle eine Drosselpatrone zugeordnet, über welche ein Teil des Öls aus der Leitung der Schmierstelle zugeführt wird. Das übrige Öl wird über die Leitung zu den weiteren Schmierstellen geleitet.

Bei diesen bekannten Systemen liegt ein Nachteil in der geringen Genauigkeit der Zudosierung und Verteilung des Schmierstoffes. Die Genauigkeit der Dosierung und Verteilung ist dabei im Wesentlichen von dem Gegendruck in den Lagerstellen abhängig. Zudem ist ein Volumenabgleich zwischen verschiedenen Schmierstellen nur sehr schwer möglich.

Aufgabe der vorliegenden Erfindung ist es demgegenüber, eine Vorrichtung zur Schmierstoffversorgung sowie eine Lageranordnung hiermit bereitzustellen, die eine exakte Mengendosierung der an jede Schmierstelle abgegebenen Schmierstoffmenge sowie eine genau Einstellung der Verteilung zwischen den einzelnen Schmierstellen ermöglicht.

Diese Aufgabe wird erfindungsgemäß mit einer Vorrichtung zur Schmierstoffversorgung nach Anspruch 1 gelöst, wobei die Vorrichtung mit einer Leitung ausgerüstet ist, über welche eine Schmierstoffquelle mit mehreren Schmierstellen verbunden ist, wobei in der Leitung wenigstens ein als Zumessventil ausgebildeter Injektor als Einsatzpatrone zur Abgabe einer definierten Schmierstoffmenge in einem Zyklus aus Druckbeaufschlagung und Druckentlastung des zugeführten Schmierstoffes vorgesehen ist, dem ein Durchgangskanal derart zugeordnet ist, dass Schmierstoff von der Schmierstoffquelle an dem Injektor vorbei in Richtung zu einer stromabwärts gelegenen Schmierstelle geleitet wird. Die eingesetzten Injektoren können dabei beispielsweise durch die Wahl entsprechend unterschiedlicher Kolben exakt hinsichtlich der Menge des abgegebenen Schmierstoffes eingestellt werden. Dies ermöglicht eine sehr genaue Zudosierung von Schmierstoff zu jeder einzelnen Schmierstelle. Weiter ist es durch die Anordnung der Injektoren in der Leitung möglich, entsprechend der Anzahl der mit Schmierstoff zu versorgenden Schmierstellen mehrere Injektoren hintereinander in die Leitung einzubringen, wobei der Durchgangskanal eine Versorgung aller Injektoren mit Schmierstoff sicherstellt. Die Injektoren lassen sich auf diese Weise besonders einfach in eine Bohrung oder dergleichen einer Lageranordnung integrieren, wodurch eine besonders kompakte und geschlossene Bauweise ermöglicht wird.

Der Durchgangskanal ist erfindungsgemäß als ein Bypasskanal innerhalb des Injektors ausgebildet. Mit anderen Worten ermöglicht der Durchgangskanal eine Strömungsverbindung von der Schmierstoffquelle an einem Injektor vorbei zu dem nächsten stromabwärts gelegenen Injektor. Wenn der Durchgangskanal dabei beispielsweise als eine Bohrung ausgebildet durch den Körper des Injektors hindurch verläuft, müssen keine zusätzlichen Bohrungen oder Ausnehmungen in der Lageranordnung vorgesehen werden. Weiter kann auch auf eine separate Leitung zur Versorgung sämtlicher Injektoren mit Schmierstoff verzichtet werden.

Nach einer bevorzugten Ausführungsform der Erfindung ist die Leitung durch eine Bohrung in einem mit Schmierstoff zu versorgenden Bauteil, beispielsweise einem Lagergehäuse oder einem Innen- oder Außenring eines Lagers, gebildet, wobei in der Bohrung die Injektoren und zwischen diesen wenigstens eine Distanzhülse vorgesehen sind. Durch Anzahl und Länge der Distanzhülsen lässt sich so der Abstand zwischen den Injektoren entsprechend der Position der Schmierstellen einstellen.

Es wird bevorzugt, wenn wenigstens ein Injektor als ein Einleitungsverteiler zur Zudosierung von Schmierstoff an eine Schmierstelle ausgebildet ist. Dabei weist der Injektor vorzugsweise einen Schmierstoffeinlass und einen einer zu schmierenden Stelle zugewandten Schmierstoffauslass auf, zwischen denen in einer Hülse, die zusammen mit einer Einlasskappe als eine in eine Leitung und/oder Bohrung einsetzbare oder einschraubbare Einsatzpatrone ausgebildet ist, ein Dichtungskolben und ein Förderkolben verschiebbar geführt sind. Hierbei weist der Dichtungskolben eine umlaufende Dichtlippe auf, die ein Durchströmen eines Schmierstoffes in Förderrichtung erlaubt und ein Zurückströmen des Schmierstoffes verhindert, und zwischen einer einen Druckentlastungskanal freigebenden und einer diesen sperrenden Stellung verschiebbar ist, wobei der Förderkolben gegen die Kraft eines elastischen Elements zur Förderung von Schmierstoff zu der zu schmierenden Stelle in Förderrichtung und zum Ansaugen von Schmierstoff durch die Kraft des elastischen Elements entgegen der Förderrichtung verschiebbar ist. Ein derartiger Aufbau der Injektoren ermöglicht eine besonders zuverlässigen und wartungsarmen Betrieb bei gleichzeitig kompakter Bauweise.

Weiter kann ein Adapter mit einem Außengewinde zum Fixieren der Einsatzpatrone bzw. des Injektors in einer Leitung und/oder in einer Gewindebohrung vorgesehen sein, wobei die Einsatzpatrone zumindest bereichsweise einen kleineren Außendurchmesser als der Adapter aufweisen kann. Auf diese Weise lässt sich das als Einsatzpatrone ausgebildete Zumessventil (Injektor) leicht in eine Bohrung bzw. Leitung einschieben und kann durch Einschrauben des Adapters befestigt werden.

Nach einer bevorzugten Ausführungsform der Erfindung ist es vorgesehen, dass die Injektoren zur Betätigung durch aufeinanderfolgende Druckbeaufschlagung und Druckentlastung mittels Öl als Schmierstoff ausgebildet sind. Der in einem Zyklus aus aufeinanderfolgender Druckbeaufschlagung und Druckentlastung zugeführte Schmierstoff dient somit gleichzeitig zur Betätigung der Injektoren.

In einigen Anwendungsfällen hat es sich als besonders vorteilhaft erwiesen, wenn zusätzlich zu dem Öl oder dergleichen Schmierstoff den Schmierstellen auch Luft zugeführt wird. Hierzu kann zusätzlich ein insbesondere im Wesentlichen parallel zu der Leitung verlaufender Luftkanal zur Zufuhr von Druckluft zu wenigstens einer der Schmierstellen vorgesehen sein. Dabei wird es bevorzugt, wenn der Luftkanal und/oder eine Abzweigkanal des Luftkanals stromabwärts von einem Injektor und vor der Schmierstelle in einer zu der Schmierstelle führenden Zufuhrleitung für Luft und den Schmierstoff, insbesondere Öl, mündet. Die von dem Injektor dosierte Ölmenge kann somit von der Luft zu der Schmierstelle transportiert werden. Gleichzeitig zu dieser Funktion als Transportmedium kann die Luft infolge des Überdrucks auch eine Dichtheitsfunktion in dem zu schmierenden Bauteil, beispielsweise einem Lager, ausüben.

In der erfindungsgemäßen Vorrichtung zur Schmierstoffversorgung müssen die Injektoren nicht alle ein identisches Fördervolumen aufweisen. Vielmehr können auch Injektoren mit unterschiedlichen Fördervolumina vorgesehen sein. Dies kann beispielsweise durch eine unterschiedliche Auslegung der Größe der Förderkolben bzw. des Hubs der Förderkolben erreicht werden.

Weiter betrifft die Erfindung eine Lageranordnung, beispielsweise eine Lageranordnung in einem Walzwerk, mit einem Außenring und einem Innenring, welche relativ zueinander verdrehbar sind, und mit Wälzkörpern, insbesondere Kugeln, welche zwischen dem Außenring und dem Innenring angeordnet sind. Dabei ist erfindungsgemäß in dem Lagergehäuse bzw. in dem Außenring und/oder in dem Innenring wenigstens eine vorzugsweise radial verlaufende Bohrung vorgesehen, die mit wenigstens einem in und/oder an dem Innen- oder Außenring vorgesehen Injektor einer Vorrichtung zur Schmierstoffversorgung der oben genannten Art verbunden ist.

Die Erfindung wird nachfolgend anhand von Ausführungsbeispielen und unter Bezugnahme auf die Zeichnung näher erläutert.

Es zeigen schematisch:
- Fig. 1: in Perspektivansicht ausschnittsweise eine erfindungsgemäße Lageranordnung,
- Fig. 2: einen Längsschnitt einer erfindungsgemäßen Vorrichtung und
- Fig. 3: einen Querschnitt der Vorrichtung nach Fig. 2.

In den Figuren ist eine Vorrichtung zur Schmierstoffversorgung mit einer Lageranordnung, wie sie beispielsweise für Walzwerke oder dgl. eingesetzt werden kann, durch ein Lagergehäuse 1 angedeutet. In diesem können ein nicht dargestellter Innen- und Außenring mit dazwischen in Laufbahnen angeordneten Kugeln vorgesehen sein, so dass der Außenring relativ zu dem Innenring verdrehbar ist. Durch das Lagergehäuse 1 der Lageranordnung erstrecken sich in radialer Richtung mehrere Bohrungen 3, welche in die Laufbahnen der Kugeln münden und damit die Schmierstellen 2 bilden.

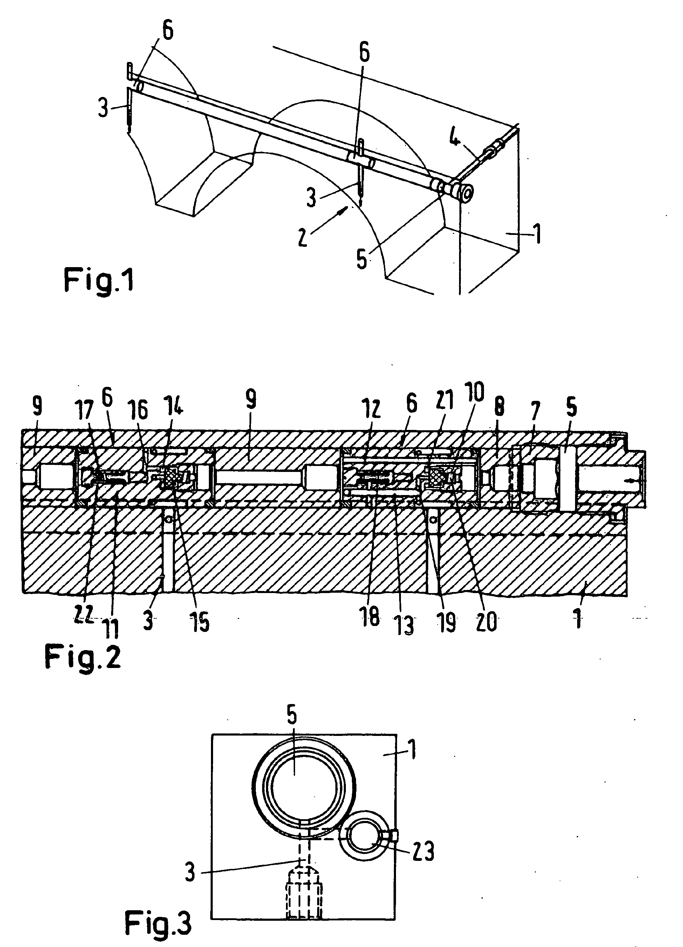

Wie in Figur 1 angedeutet, wird durch mehrere Bohrungen 4, 5 in dem Lagergehäuse 1 eine Leitung definiert, in der Schmierstoff, bspw. Öl, von einer nicht dargestellten Schmierstoffquelle zu den Schmierstellen 2 geleitet wird. In dieser Leitung 4, 5 ist ein in der dargestellten Ausführungsform als Einleitungsverteiler (Injektor) 6 ausgebildetes Zumessventil vorgesehen, welcher als Einsatzpatrone in die Bohrung 5 eingeschoben ist.

Auf der in Figur 2 rechten, außen liegende Seite ist die Bohrung 5 durch einen Adapter 7 verschlossen, welcher in einem Gewindeabschnitt der Bohrung 5 eingeschraubt ist, und hierdurch den als Einsatzpatrone ausgebildeten Einleitungsverteiler 6 fixiert. Zwischen den Einleitungsverteilern 6 sind Distanzhülsen 8, 9 in der Leitung vorgesehen, so dass die Einleitungsverteiler 6 jeweils einer Bohrung 3 bzw. Schmierstelle 2 zugeordnet sind. Die Leitung 4, 5 kann durch ein Anschlusselement, welches zur Verbindung mit einer externen Schmierstoffleitung ausgebildet ist, verschlossen sein.

Jeder Einleitungsverteiler 6 ist im Wesentlichen durch eine Einlasskappe 10 und eine Hülse 11 gebildet, welche zusammen die Einsatzpatrone bilden. Der Außendurchmesser der Einsatzpatrone ist dabei kleiner als der Außendurchmesser des Adapters 7, so dass sich die Einsatzpatrone leicht in die Bohrung 5 einführen lässt.

Der durch die zentrale Öffnung in der Einlasskappe 10 bzw. der Hülse 11 definierte Schmierstoffeinlass steht mit einem Durchgangskanal 12 in Verbindung, der in der Art einer Bypassleitung durch die Hülse 11 hindurch zu der stromabwärts gelegenen Distanzhülse 8 führt. Auf der in Figur 2 unteren Seite ist jeder Einleitungsverteiler 6 mit einem den zu schmierenden Wälzkörpern zugewandten Schmierstoffauslass 13 versehen. Die beiden in Figur 2 dargestellten Einleitungsverteiler 6 sind relativ zueinander um 90° gedreht dargestellt, so dass in den beiden Einleitungsverteilern 6 unterschiedliche Kanäle und Bohrungen sichtbar sind, die jedoch bei beiden Einleitungsverteilern 6 vorhanden sind.

Der Schmierstoffeinlass mündet zunächst in einen ersten Zylinderraum 14, in welchem ein als Umsteuerventil arbeitender Dichtungskolben 15 verschiebbar geführt ist. Aus dem ersten Zylinderraum 14 führt ein axialer Kanal 16 in einen in den Figuren linken, zweiten Zylinderraum 17, der über Bohrungen in den Schmierstoffauslass 13 mündet. In dem zweiten Zylinderraum 17 ist ein Förderkolben 18 verschiebbar geführt. Zusätzlich zweigt aus dem ersten Zylinderraum 14 ein Umsteuer- oder Druckentlastungskanal 19 ab, welcher in den zweiten Zylinderraum 17 mündet.

Der Dichtungskolben 15 wird durch eine Feder 20 in der Figur nach links beaufschlagt, so dass der Dichtungskolben 15 gegen den Druckentlastungskanal 19 gedrückt wird und diesen absperrt. Weiter ist der Dichtungskolben 15 mit einer umlaufenden Dichtlippe 21 versehen, welche eine Strömung eines Schmierstoffes in dem ersten Zylinderraum 14 in Förderrichtung, das heißt in der Figur nach links, erlaubt, ein Zurückströmen des Schmierstoffs in entgegengesetzter Richtung jedoch verhindert. Der Förderkolben 18 ist in dem zweiten Zylinderraum 17 abgedichtet geführt, so dass Schmierstoff nicht durch den zweiten Zylinderraum 17 an dem Förderkolben 18 vorbei strömen kann. Eine Feder 22 drückt den Förderkolben 18 entgegen der Förderrichtung des Schmierstoffes in Figur 2 nach rechts.

Wird nun in der Druckphase Schmierstoff durch die Leitung 4, 5 in den Schmierstoffeinlass der Einsatzpatrone 6 gedrückt, so wird der Dichtungskolben 15 fest gegen den Druckentlastungskanal 19 gepresst und schließt diesen ab. Gleichzeitig kann der Schmierstoff an der Dichtlippe 21 vorbei fließen, welche sich durch den Druck des Schmierstoffs verformt. Der Schmierstoff gelangt über den axialen Kanal 16 in den zweiten Zylinderraum 17 und bewegt den Förderkolben 18 gegen den Druck der Feder 22 in Förderrichtung. Hierdurch wird im linken Bereich des zweiten Zylinderraums 17 aufgenommener Schmierstoff durch den Schmierstoffauslass 13 zu der zu schmierenden Stelle gefördert.

In der Druckentlastungsphase wird kein weiterer Schmierstoff über die Leitung 4, 5 zugeführt. Der Dichtungskolben 15 wird alleine durch die Kraft der Feder 22 gegen den Druckentlastungskanal 19 angelegt. Die durch die Druckphase komprimierte Feder 22 ist dagegen so ausgelegt, dass in der Entlastungsphase der Förderkolben 18 in der Figur nach rechts verschoben werden kann. Hierdurch wird der rechts des Förderkolbens 18 in dem zweiten Zylinderraum 17 aufgenommene Schmierstoff durch den axialen Kanal 16 in den ersten Zylinderraum 14 gedrängt. Der Schmierstoff kann jedoch die Dichtlippe 21 des Dichtkolbens 15 nicht passieren und hebt diesen gegen die Kraft der Feder 20 von dem Druckentlastungskanal 19 ab. Der Schmierstoff kann somit durch den Druckentlastungskanal 19 strömen und von diesem in den zweiten Zylinderraum 17 fließen.

Wenn der Förderkolben 18 seine in Figur 2 gezeigte rechte Endstellung erreicht hat, kann in einer erneuten Druckphase der Schmierstoff aus dem linken Bereich des zweiten Zylinderraums 17 von dem Förderkolben zu dem Schmierstoffauslass 13 gefördert werden.

Die beiden in Figur 2 gezeigten Einleitungsverteiler 6 haben unterschiedlich gestaltete Förderkolben 18. So hat der in der Figur linke Förderkolben einen größeren Durchmesser und einen größeren Hub als der Förderkolben des in der Figur rechts dargestellten Einleitungsverteilers 6. Hierdurch wird ein größeres Fördervolumen bei jedem Hub des Förderkolbens 18 des linken Einleitungsverteilers 6 erreicht.

Zusätzlich zu der Leitung 4, 5 ist in Figur 2 gestrichelt ein Luftkanal 23 angedeutet, der, wie in Figur 3 erkennbar ist, im Wesentlichen parallel zu der Leitung 4, 5 verläuft. Über den Luftkanal 23 wird Druckluft zu dem Schmierstoffauslass 13 geleitet. Über eine Querbohrung wird die Druckluft vor dem Schmierstoffauslass 13 mit dem von dem Einleitungsverteiler 6 zudosierten Schmierstoff, der bei der dargestellten Ausführungsform Öl ist, gemischt. Die Luft transportiert das Öl zu der jeweiligen Schmierstelle und kann gleichzeitig die Dichtigkeit in einem Lager verbessern.

### Bezugszeichenliste:

- 1: Lagergehäuse
- 2: Schmierstelle
- 3: Bohrung
- 4: Bohrung (Leitung)
- 5: Bohrung (Leitung)
- 6: Einleitungsverteiler (Injektor)
- 7: Adapter
- 8: Distanzhülse
- 9: Distanzhülse
- 10: Einlasskappe
- 11: Hülse
- 12: Durchgangskanal
- 13: Schmierstoffauslass
- 14: erster Zylinderraum
- 15: Dichtungskolben
- 16: axialer Kanal
- 17: zweiter Zylinderraum
- 18: Förderkolben
- 19: Druckentlastungskanal
- 20: Feder
- 21: Dichtlippe
- 22: Feder
- 23: Luftkanal

## Patentansprüche

1. Vorrichtung zur Schmierstoffversorgung, insbesondere zur Zudosierung von Schmierstoff zu Schmierstellen (2) in einem Walzwerk, mit einer Leitung (4, 5), über welche eine Schmierstoffquelle mit mehreren Schmierstelle (2) verbunden ist, wobei in der Leitung (4, 5) wenigstens ein als Zumessventil ausgebildeter Injektor (6) als Einsatzpatrone zur Abgabe einer definierten Schmierstoffmenge in einem Zyklus aus Druckbeaufschlagung und Druckentlastung des zugeführten Schmierstoffes vorgesehen ist, dem ein Durchgangskanal (12) derart zugeordnet ist, dass Schmierstoff von der Schmierstoffquelle an dem Injektor (6) vorbei in Richtung zu einer stromabwärts gelegenen Schmierstelle (2) geleitet wird, **dadurch gekennzeichnet, dass** der Durchgangskanal (12) als ein Bypasskanal innerhalb des Injektors (6) ausgebildet ist.

2. Vorrichtung zur Schmierstoffversorgung nach Anspruch 1, **dadurch gekennzeichnet, dass** die Leitung (4, 5) durch eine Bohrung in einem mit Schmierstoff zu versorgenden Bauteil gebildet ist, wobei in der Bohrung die Injektoren (6) und zwischen diesen wenigstens eine Distanzhülse (8, 9) vorgesehen sind.

3. Vorrichtung zur Schmierstoffversorgung nach einem der vorhergehenden Ansprüche, **dadurch gekennzeichnet, dass** wenigstens ein Injektor (6) als ein Einleitungsverteiler zur Zudosierung von Schmierstoff an eine Schmierstelle (2) ausgebildet ist, und einen Schmierstoffeinlass und einen einer zu schmierenden Stelle (2) zugewandten Schmierstoffauslass (13) aufweist, zwischen denen in einer Hülse (11), die zusammen mit einer Einlasskappe (10) als eine in eine Leitung (4, 5) und/oder Bohrung (4, 5) einsetzbare oder einschraubbare Einsatzpatrone ausgebildet ist, ein Dichtungskolben (15) und ein Förderkolben (18) verschiebbar geführt sind, wobei der Dichtungskolben (15) eine umlaufende Dichtlippe (21) aufweist, die ein Durchströmen eines Schmierstoffes in Förderrichtung erlaubt und ein Zurückströmen des Schmierstoffes verhindert, und zwischen einer einen Druckentlastungskanal (19) freigebenden und einer diesen sperrenden Stellung verschiebbar ist, und wobei der Förderkolben (18) gegen die Kraft eines elastischen Elements (22) zur Förderung von Schmierstoff zu der zu schmierenden Stelle (2) in Förderrichtung und zum Ansaugen von Schmierstoff durch die Kraft des elastischen Elements (22) entgegen der Förderrichtung verschiebbar ist.

4. Vorrichtung zur Schmierstoffversorgung nach einem der vorhergehenden Ansprüche, **gekennzeichnet durch** einen Adapter (7) mit einem Außengewinde zum Fixieren der Einsatzpatrone in einer Leitung (4, 5) und/oder Gewindebohrung (4, 5), wobei die Einsatzpatrone zumindest bereichsweise einen kleineren Außendurchmesser als der Adapter (7) aufweist.

5. Vorrichtung zur Schmierstoffversorgung nach einem der vorhergehenden Ansprüche, **dadurch gekennzeichnet, dass** die Injektoren (6) zur Betätigung durch aufeinanderfolgende Druckbeaufschlagung und Druckentlastung mittels Öl als Schmierstoff ausgebildet sind.

6. Vorrichtung zur Schmierstoffversorgung nach einem der vorhergehenden Ansprüche, die zusätzlich einen insbesondere im Wesentlichen parallel zu der Leitung (5) verlaufenden Luftkanal (23) zur Zufuhr von Druckluft zu wenigstens einer der Schmierstellen (2) aufweist.

7. Vorrichtung zur Schmierstoffversorgung nach Anspruch 6, **dadurch gekennzeichnet, dass** der Luftkanal (23) und/oder ein Abzweigkanal des Luftkanals (23) stromabwärts von einem Injektor (6) und vor der Schmierstelle (2) in eine zu der Schmierstelle führende Zufuhrleitung für Luft und den Schmierstoff, insbesondere Öl, mündet.

8. Vorrichtung zur Schmierstoffversorgung nach einem der vorhergehenden Ansprüche, **dadurch gekennzeichnet, dass** wenigstens zwei der Injektoren (6) ein unterschiedliches Fördervolumen aufweisen.

9. Lageranordnung, insbesondere in einem Walzwerk, mit einem Außenring und einem Innenring, welche relativ zueinander verdrehbar sind, und mit Wälzkörpern, insbesondere Kugeln, welche zwischen dem Außenring und dem Innenring angeordnet sind, wobei in dem Außenring und/oder in dem Innenring wenigstens eine vorzugsweise radial verlaufende Bohrung vorgesehen ist, die mit wenigstens einem in und/oder an dem Innen- oder Außenring vorgesehenen Injektor (6) einer Vorrichtung zur Schmierstoffversorgung nach einem der vorhergehenden Ansprüche verbunden ist.

## Claims

1. A device for supplying lubricant, in particular for dosing lubricant to lubrication points (2) in a roller mill, comprising a conduit (4, 5) via which a lubricant source is connected to a plurality of lubrication points (2), wherein at least one injector (6) designed as metering valve is provided in the conduit (4, 5) as cartridge insert for releasing a defined amount of lubricant in a cycle of pressure application and pressure release, to which injector, a connecting channel (12) is assigned in such a manner that lubricant is fed from the lubricant source, past the injector (6), in the direction of a lubrication point (2) located downstream, **characterized in that** the connecting channel (12) is designed as bypass channel inside the injector (6).

2. The device for supplying lubricant according to claim 1, **characterized in that** the conduit (4, 5) is formed by a bore in a component to be supplied with lubricant, wherein in the bore, the injectors (6) and between the same, at least one spacer sleeve (8, 9) are provided.

3. The device for supplying lubricant according to any one of the preceding claims, **characterized in that** at least one injector (6) is designed as single-line distributor for dosing lubricant to a lubrication point (2) and has a lubricant inlet and a lubricant outlet (13) facing toward the point (2) to be lubricated, between which lubricant inlet and lubricant outlet, in a sleeve (11) which together with an inlet cap (10) is designed as cartridge insert which can be inserted or screwed into a conduit (4, 5) and/or bore (4, 5), a sealing piston (15) and a feeding piston (18) are displaceably guided, wherein the sealing piston (15) has a circumferential sealing lip (21) which allows a lubricant to flow through in the feeding direction and prevents the lubricant from flowing back, and is displaceable between a position releasing a pressure release channel (19) and a position blocking the same, and wherein the feeding piston (18) is displaceable in the feeding direction against the force of an elastic element (22) for feeding lubricant to the point (2) to be lubricated and is displaceable opposite to the feeding direction by the force of the elastic element (22) for suctioning lubricant.

4. The device for supplying lubricant according to any one of the preceding claims, **characterized by** an adapter (7) having an external thread for fixing the cartridge insert in a conduit (4, 5) and/or threaded hole (4, 5), wherein the cartridge insert, at least in some regions, has a smaller outer diameter than the adapter (7).

5. The device for supplying lubricant according to any one of the preceding claims, **characterized in that** the injectors (6) are designed for actuation by successive pressure application and pressure release by means of oil as lubricant.

6. The device for supplying lubricant according to any one of the preceding claims, the device having in addition an air channel (23) for feeding pressurized air to at least one of the lubrication points (2), which air channel extends in particular substantially parallel to the conduit (5).

7. The device for supplying lubricant according to claim 6, **characterized in that** the air channel (23) and/or a branch channel of the air channel (23) opens out downstream of an injector (6) and upstream of the lubricant point (2) into a feed conduit for air and the lubricant, in particular oil, which feed conduit runs to the lubricant point.

8. The device for supplying lubricant according to any one of the preceding claims, **characterized in that** at least two of the injectors (6) have a different delivery volume.

9. A bearing assembly, in particular for a roller mill, comprising an outer ring and an inner ring which are rotatable relative to each other, and further comprising rolling elements, in particular balls, which are arranged between the outer ring and the inner ring, wherein in the outer ring and/or the inner ring at least one preferably radially extending bore is provided which is connected to at least one injector (6) of a device for supplying lubricant according to any one of the preceding claims, which injector is provided in and/or on the inner or outer ring.

## Revendications

1. Dispositif d'alimentation en lubrifiant et en particulier pour le dosage de lubrifiant vers des points à lubrifier (2) dans un laminoir, comprenant une conduite (4, 5) par laquelle une source de lubrifiant est reliée à plusieurs points à lubrifier (2), sachant que dans la conduite (4, 5), au moins un injecteur (6) formé comme une soupape de dosage est prévu en tant que cartouche d'insertion pour délivrer une quantité définie de lubrifiant dans un cycle d'alimentation en pression et de décompression du lubrifiant amené, auquel un canal de passage (12) est attribué, que du lubrifiant est dirigé de la source de lubrifiant en passant devant l'injecteur (6) en direction d'un point à lubrifier disposé en aval, **caractérisé en ce que** le canal de passage (12) est formé comme un canal de dérivation à l'intérieur de l'injecteur (6).

2. Dispositif d'alimentation en lubrifiant selon la revendication 1, **caractérisé en ce que** la conduite (4, 5) est formée par un perçage dans une pièce de construction à laquelle du lubrifiant doit être fourni, sachant que dans le perçage, les injecteurs (6) et entre eux au moins un manchon d'écartement (8, 9), sont prévus.

3. Dispositif d'alimentation en lubrifiant selon l'une des revendications précédentes, **caractérisé en ce qu'**au moins un injecteur (6) est formé comme un distributeur pour le dosage de lubrifiant à un point à lubrifier (2), et présente une admission de lubrifiant et une sortie de lubrifiant (13) tournée en direction d'un point (2) à lubrifier, entre lesquelles, dans un manchon (11) qui est formé conjointement avec un bouchon d'admission (10) en tant que cartouche d'insertion insérable ou vissable dans une conduite (4, 5) et/ou un perçage (4, 5), un piston de compression (15) et un piston d'alimentation (18) sont dirigés de manière à pouvoir être déplacés, sachant que le piston de compression (15) présente une lèvre d'étanchéité (21) périphérique qui permet l'écoulement d'un lubrifiant dans la direction d'alimentation et empêche un retour du lubrifiant, et peut être déplacé entre une position libérant un canal de décompression (19) et une position bloquant celui-ci, et sachant que le piston d'alimentation (18) peut être déplacé contre la force d'un élément élastique (22) pour amener du lubrifiant au point (2) à lubrifier dans la direction d'alimentation et pour aspirer le lubrifiant par la force de l'élément élastique (22) contre la direction d'alimentation.

4. Dispositif d'alimentation en lubrifiant selon l'une des revendications précédentes, **caractérisé par** un adaptateur (7) avec un filetage extérieur pour fixer la cartouche d'insertion dans une conduite (4, 5) et/ou un perçage fileté (4, 5), sachant que la cartouche d'insertion présente au moins par tronçons un diamètre extérieur plus petit que l'adaptateur (7).

5. Dispositif d'alimentation en lubrifiant selon l'une des revendications précédentes, **caractérisé en ce que** les injecteurs (6) sont formés pour l'actionnement par l'alimentation en pression et la décompression successives au moyen d'huile comme lubrifiant.

6. Dispositif d'alimentation en lubrifiant selon l'une des revendications précédentes, qui présente en plus un conduit à air (23) s'étendant essentiellement parallèlement à la conduite (5) pour amener de l'air comprimé à au moins un des points à lubrifier (2).

7. Dispositif d'alimentation en lubrifiant selon la revendication 6, **caractérisé en ce que** le conduit à air (23) et/ou un canal de dérivation du conduit à air (23) débouche en aval d'un injecteur (6) et avant le point à lubrifier (2) dans une conduite d'alimentation conduisant au point à lubrifier pour de l'air et le lubrifiant, en particulier de l'huile.

8. Dispositif d'alimentation en lubrifiant selon l'une des revendications précédentes, **caractérisé en ce qu'**au moins deux des injecteurs (6) présentent un volume d'alimentation différent.

9. Ensemble palier, en particulier dans un laminoir, comprenant une bague extérieure et une bague intérieure, lesquelles sont rotatives l'une par rapport à l'autre, et des corps de laminage, en particulier des billes, lesquelles sont disposées entre la bague extérieure et la bague intérieure, sachant que dans la bague extérieure et/ou dans la bague intérieure, au moins un perçage s'étendant radialement est prévu de préférence, lequel est relié à au moins un injecteur (6), prévu dans et/ou sur la bague intérieure ou extérieure, d'un dispositif d'alimentation de lubrifiant selon l'une des revendications précédentes.
